# EUROPEAN PATENT APPLICATION

(11) **EP 4 726 643 A1**
(43) Date of publication of application: **15.04.2026**
(21) Application number: 24853316.8
(22) Date of filing: 31.05.2024
(51) Int. Cl.: G06T 1/60

(54) **GRAPHICS DRAWING METHOD AND APPARATUS, AND ELECTRONIC DEVICE**

(30) Priority: 14.08.2023 CN 202311020480
(71) Applicant: Huawei Technologies Co., Ltd., Shenzhen, Guangdong 518129 (CN)
(72) Inventor: WANG, Yaming, Shenzhen, Guangdong 518129 (CN)
(74) Representative: Pfenning, Meinig & Partner mbB
(86) International application number: PCT/CN2024/096668
(87) International publication number: WO 2025/035901

(57) **Abstract**

Embodiments of this application provide a graphics drawing method and apparatus, and an electronic device. In the foregoing graphics drawing method, the electronic device obtains an input callback instruction in response to a vertical synchronization signal, then obtains touch points, draws a graphic based on the touch points, and draws a graphics drawing result into a default frame buffer object. Then, the electronic device copies the graphics drawing result from the default FBO to an FBO bound to an eglImage, and obtains a callback instruction of a drawing frame in response to the vertical synchronization signal. The electronic device obtains, in response to the callback instruction of the drawing frame, the graphics drawing result from the FBO bound to the eglImage, and fills a created bitmap with the graphics drawing result. Finally, the electronic device draws the filled bitmap on a canvas. In this way, a manner combining off-screen rendering and fast copy may be used to perform rendering in a time sequence of an original control view, to improve handwriting effect and hand-following performance of a handwriting application.

## Description

This application claims priority to Chinese Patent Application No. 202311020480.3, filed with the China National Intellectual Property Administration on August 14, 2023 and entitled "GRAPHICS DRAWING METHOD AND APPARATUS, AND ELECTRONIC DEVICE", which is incorporated herein by reference in its entirety.

### TECHNICAL FIELD

Embodiments of this application relate to the field of intelligent terminal technologies, and in particular, to a graphics drawing method and apparatus, and an electronic device.

### BACKGROUND

Handwriting effect and hand-following performance are two important indicators for developing a handwriting application on an existing Android (Android) or harmony operating system (harmony operating system, HarmonyOS) mobile platform.

To implement advanced handwriting effect (for example, brush stroke effect, texture effect, transparency, and/or color blending), an open graphics library (open graphics library, OpenGL) is usually required, and an open Skia-based canvas (Canvas) interface provided by an operating system of an electronic device cannot implement the foregoing effect.

However, when OpenGL is used to implement the advanced handwriting effect, a solution provided in the conventional technology is to use a surface view (SurfaceView) or texture view (TextureView) control encapsulated based on a surface (surface). However, the two controls have independent life cycles and rendering time sequences, and cannot be effectively combined with another conventional control in an application, for example, cannot perform color blending with a rendering result of another control, or cannot perform secondary rendering based on a drawing result of another control.

Another solution is to use an off-screen rendering capability of OpenGL to create an independent display memory area for rendering. After rendering ends, a result is copied from a graphics processing unit (graphics processing unit, GPU) to a central processing unit (central processing unit, CPU), and then an image is drawn in the CPU by using a Skia-based canvas provided by the system. However, this method is limited by data copying from the GPU to the CPU, and cannot achieve good hand-following performance.

### SUMMARY

Embodiments of this application provide a graphics drawing method and apparatus, and an electronic device, and embodiments of this application further provide a computer-readable storage medium, to improve handwriting effect and hand-following performance of a handwriting application.

According to a first aspect, an embodiment of this application provides a graphics drawing method, including: obtaining an input callback instruction in response to a vertical synchronization signal; obtaining touch points in response to the input callback instruction; drawing a graphic based on the touch points, and drawing a graphics drawing result into a default frame buffer object; copying the graphics drawing result from the default frame buffer object to a frame buffer object bound to an embedded system graphics library image; obtaining a callback instruction of a drawing frame in response to the vertical synchronization signal; obtaining, in response to the callback instruction of the drawing frame, the graphics drawing result from the frame buffer object bound to the embedded system graphics library image; filling a created bitmap with the graphics drawing result; and drawing the filled bitmap on a canvas.

In the foregoing graphics drawing method, the electronic device obtains the input callback instruction in response to the vertical synchronization signal, then obtains the touch points in response to the input callback instruction, draws the graphic based on the touch points, and draws the graphics drawing result into the default frame buffer object. Then, the electronic device copies the graphics drawing result from the default frame buffer object to the frame buffer object bound to the eglImage, and obtains the callback instruction of the drawing frame in response to the vertical synchronization signal. The electronic device obtains, in response to the callback instruction of the drawing frame, the graphics drawing result from the frame buffer object bound to the eglImage, and fills the created bitmap with the graphics drawing result. Finally, the electronic device draws the filled bitmap on the canvas. In this way, a manner combining off-screen rendering and fast copy may be used to perform rendering in a time sequence of an original control view, to improve handwriting effect and hand-following performance of a handwriting application.

In a possible implementation, drawing the graphic based on the touch points includes: performing interpolation processing based on the touch points, to generate interpolated points; and submitting the interpolated points to a graphics processing unit through a graphics library instruction, so that the graphics processing unit draws the graphic based on the interpolated points.

In a possible implementation, the frame buffer object bound to the embedded system graphics library image is located in a hardware buffer bound to the embedded system graphics library image; and obtaining, in response to the callback instruction of the drawing frame, the graphics drawing result from the frame buffer object bound to the embedded system graphics library image includes: obtaining, in response to the callback instruction of the drawing frame, the graphics drawing result from the hardware buffer bound to the embedded system graphics library image.

In a possible implementation, copying the graphics drawing result from the default frame buffer object to the frame buffer object bound to the embedded system graphics library image includes: obtaining a partial region to which the graphics drawing result belongs; and copying pixels of the partial region from the default frame buffer object to the frame buffer object bound to the embedded system graphics library image.

In a possible implementation, obtaining, in response to the callback instruction of the drawing frame, the graphics drawing result from the frame buffer object bound to the embedded system graphics library image includes: obtaining, in response to the callback instruction of the drawing frame, the pixels of the partial region from the frame buffer object bound to the embedded system graphics library image.

In a possible implementation, filling the created bitmap with the graphics drawing result includes: filling the created bitmap with the obtained pixels of the partial region.

In a possible implementation, before obtaining the input callback instruction in response to the vertical synchronization signal, the method further includes: starting a target application, where the target application includes a handwriting application; creating an off-screen rendering environment, and creating the embedded system graphics library image bound to the hardware buffer; and creating the frame buffer object bound to the embedded system graphics library image.

According to a second aspect, an embodiment of this application provides a graphics drawing apparatus. The apparatus is included in an electronic device, and the apparatus has a function of implementing behavior of the electronic device in the first aspect and the possible implementations of the first aspect. The function may be implemented by hardware, or may be implemented by executing corresponding software by hardware. The hardware or the software includes one or more modules or units corresponding to the foregoing functions, for example, an obtaining module, a drawing module, and a copy module.

According to a third aspect, an embodiment of this application provides an electronic device, including one or more processors, a memory, a plurality of applications, and one or more computer programs. The one or more computer programs are stored in the memory, the one or more computer programs include instructions, and when the instructions are executed by the electronic device, the electronic device is enabled to perform the method provided in the first aspect.

It should be understood that technical solutions in the second and third aspects of embodiments of this application are consistent with the technical solution in the first aspect of embodiments of this application, and beneficial effects achieved by the aspects and corresponding feasible implementations are similar. Details are not described again.

According to a fourth aspect, embodiments of this application provide a computer-readable storage medium. The computer-readable storage medium stores a computer program. When the computer program is run on a computer, the computer is enabled to perform the method provided in the first aspect.

According to a fifth aspect, an embodiment of this application provides a computer program. When the computer program is executed by a computer, the computer program is used to perform the method according to the first aspect.

In a possible design, some or all of the programs in the fifth aspect may be stored in a storage medium packaged together with a processor, or may be stored in a memory not packaged together with a processor.

### BRIEF DESCRIPTION OF DRAWINGS

FIG. 1 is a flowchart of performing drawing by using OpenGL in combination with Surface View;
FIG. 2 is a diagram of an overall rendering time sequence of Texture View;
FIG. 3 is a flowchart of performing off-screen rendering by using OpenGL;
FIG. 4 is a diagram of a rendering time sequence of performing off-screen rendering by using OpenGL;
FIG. 5 is a diagram of a structure of an electronic device according to an embodiment of this application;
FIG. 6 is a diagram of an architecture of a graphics drawing method according to an embodiment of this application;
FIG. 7A and FIG. 7B are a flowchart of a graphics drawing method according to an embodiment of this application;
FIG. 8 is a diagram of a partial region according to an embodiment of this application;
FIG. 9 is a diagram of fast copying according to an embodiment of this application;
FIG. 10 is a flowchart of a graphics drawing method according to another embodiment of this application;
FIG. 11 is a diagram of a structure of an electronic device according to another embodiment of this application; and
FIG. 12 is a diagram of a structure of an electronic device according to still another embodiment of this application.

### DESCRIPTION OF EMBODIMENTS

Terms used in implementations of this application are only used to explain specific embodiments of this application, but are not intended to limit this application.

The following first describes a handwriting implementation solution provided in the conventional technology.

A solution provided in the conventional related technology is to perform handwriting effect drawing by using a Skia-based canvas provided by a system. In this technical solution, a default canvas interface provided by a system framework is used to perform drawing, default drawPath and drawOval interfaces are used to implement drawing by connecting points into a line, and a drawBitmap interface is used to implement color blending effect.
(1) A drawPath method is a curve drawing method encapsulated by the system. Curve effect is implemented by constructing a path object. However, a width of a drawn curve does not change (that is, brush stoke effect cannot be implemented).
(2) A drawOval method is originally intended to draw an oval. Because a width of a final curve line needs to be changed, a width of the line is visually changed by changing sizes of major and minor axes of an oval corresponding to each point. However, all computation and display are performed on a CPU side, and efficiency is low when a quantity of points is large.
(3) A drawBitmap method may be used to blend colors of two images by setting a color blending mode of a paint parameter in an interface. However, the color blending mode cannot be customized, and only a color blending mode provided by the system can be used.

However, the foregoing solution cannot implement advanced handwriting effect such as texture effect, cannot freely adjust transparency, and cannot customize a color blending mode.

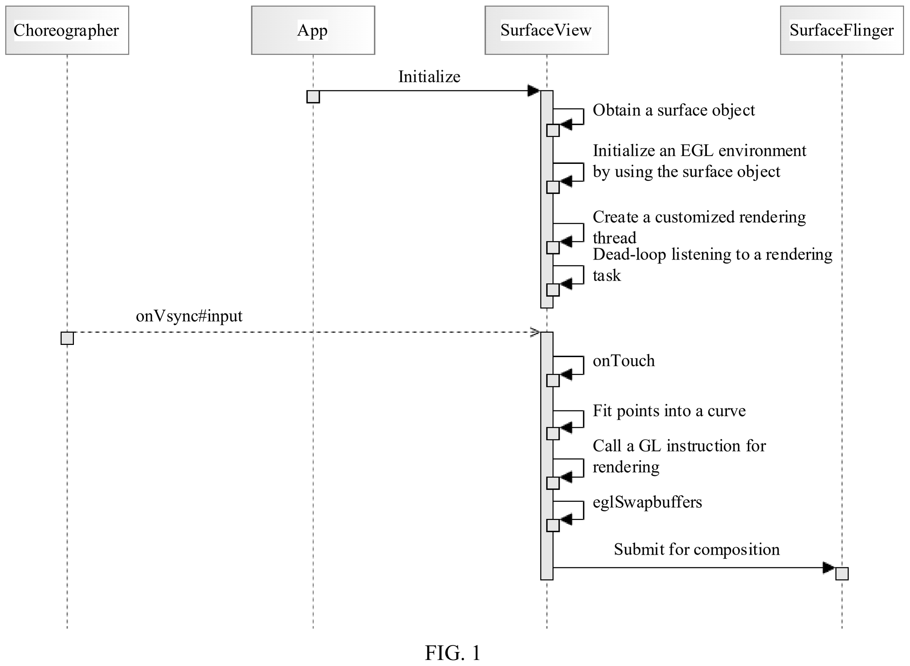

Another solution provided in the conventional technology is to perform drawing by using OpenGL in combination with SurfaceView. FIG. 1 is a flowchart of performing drawing by using OpenGL in combination with SurfaceView. As shown in FIG. 1, a rendering process is as follows:
(1) In an initialization phase, an embedded system graphics library (embedded-system graphics library, EGL) environment is initialized by using a surface object held in SurfaceView. The EGL environment is an execution environment of OpenGL.
(2) A customized rendering thread is started to listen to a rendering task.
(3) SurfaceView listens to a touch event by registering onTouchListener.
(4) The touch event is reported by a choreographer (Choreographer) based on a vertical synchronization (vertical synchronization, Vsync) signal (when a screen refresh rate is 60 Hz, the touch event is reported every 16.6 ms, and when the screen refresh rate is 120 Hz, the touch event is reported every 8.3 ms).
(5) After the touch event is obtained, interpolation is performed on touch points in combination with historical points to generate dense points. These points generated by interpolation are connected to form a fitted curve.
(6) An OpenGL instruction is called to draw the points generated by interpolation.
(7) A drawing result is submitted to SurfaceFlinger (Surfaceflinger) through an eglSwapBuffers interface. Then, the result is composed by SurfaceFlinger and then sent to a screen for display.

However, in the foregoing solution, SurfaceView has its own rendering time sequence and is independent of a view (View) hierarchy of the application. Therefore, SurfaceView can be located only at a top or bottom layer of an entire application window, and cannot be nested in another view for use.

In addition, because SurfaceView has the independent rendering time sequence, a developer needs to additionally set a corresponding listener to process time sequence-related data. This increases an additional data processing workload. SurfaceView cannot perform actions such as translation, rotation, and/or scaling.

In addition, the developer needs to implement onSurfaceCreated in SurfaceHolder#Callback, onSurfaceCreated and onSurfaceDestroy interfaces to process data in different scenarios. For example, after an application returns to the background by using a home (home) button, a surface object in SurfaceView is destroyed and an onSurfaceDestroy method is performed. In this case, the developer needs to save data. After the application returns to the foreground, a surface object is recreated and an onSurfaceCreated method is performed again. In this case, rendering needs to be performed again. A common view control does not have the foregoing special processing problem in time sequence.

Still another solution provided in the conventional technology is to perform rendering by using TextureView in combination with OpenGL. An overall rendering process of performing rendering by using TextureView in combination with OpenGL is similar to that of SurfaceView. However, after the rendering ends, after an eglSwapBuffers method is called, an onFrameAvaliable method needs to be used to notify a user interface (user interface, UI) thread, to draw a drawing result of a current frame in a next frame. Therefore, although TextureView may perform drawing with reference to a time sequence of a common view, a latency of at least one frame occurs. This affects hand-following performance.

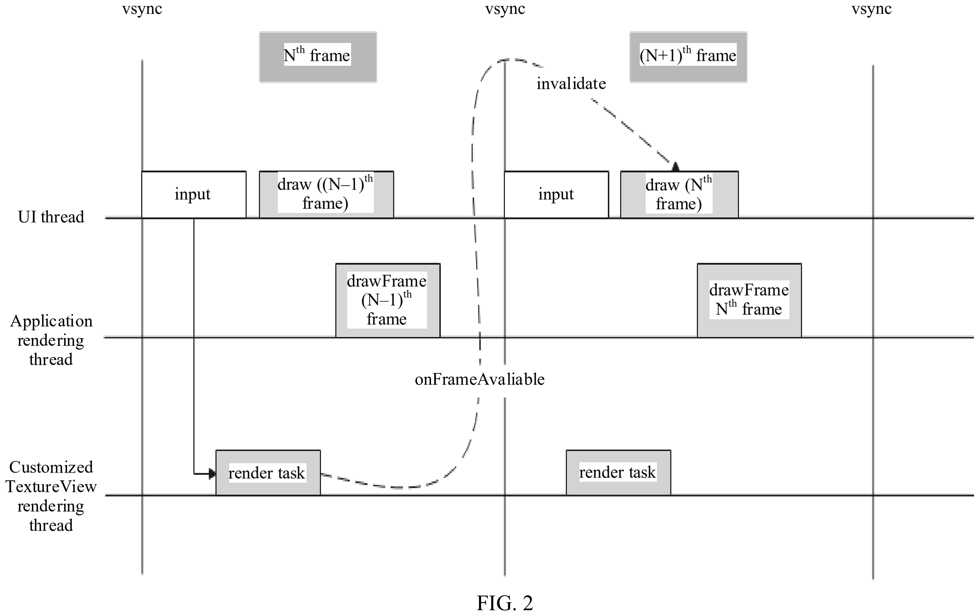

FIG. 2 is a diagram of an overall rendering time sequence of TextureView. As shown in FIG. 2, after the N^{th} frame is drawn, an onFrameAvaliable interface of SurfaceTexture is automatically called through an eglSwapBuffers interface. In the onFrameAvaliable interface, the invalidate() method of TextureView is called to subscribe to a Vsync signal of the next frame. In the (N+1)^{th} frame, a drawing result of TextureView in the N^{th} frame is rendered.

However, hand-following performance is poor in the foregoing solution. The drawing result of the current frame can be displayed only in the next frame, and a latency of one frame exists by default.

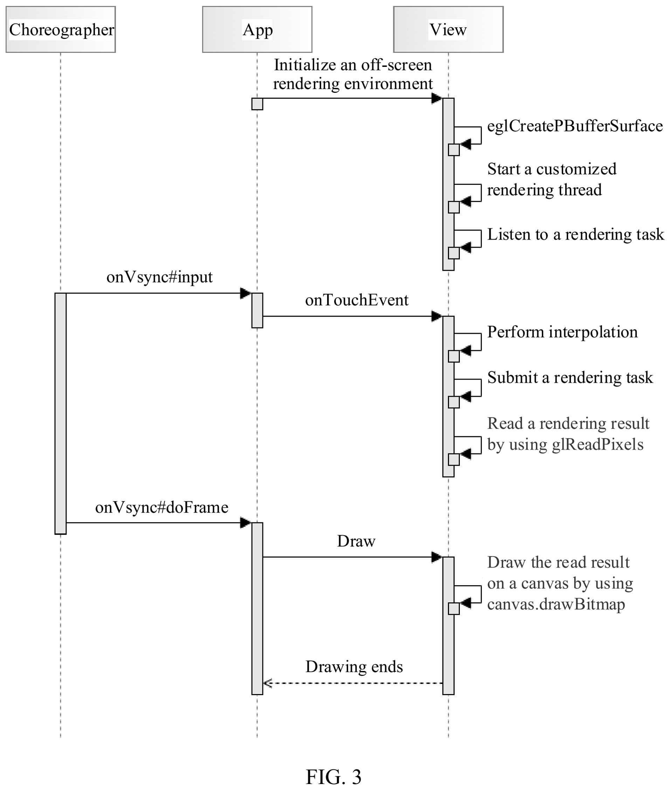

Yet another solution provided in the conventional technology is to perform rendering in an independent display memory of a GPU through off-screen rendering of OpenGL, copy a result from the GPU to a CPU after the rendering ends, and then the CPU sends the result for display by using a drawBitmap method of a canvas. FIG. 3 is a flowchart of performing off-screen rendering by using OpenGL. As shown in FIG. 3, a rendering procedure may include the following steps.
(1) In an initialization phase, an off-screen rendering environment is initialized by calling eglCreatePBufferSurface.
(2) In a drawing phase, a rendering task is submitted in onTouchEvent.
(3) The rendering task performs point interpolation and calls a graphics library (graphics library, GL) instruction, to draw a rendering result into an off-screen display memory.
(4) The rendering result is read from a GPU off-screen buffer to the CPU through glReadPixels, to form a bitmap (Bitmap).
(5) When a callback instruction of a drawing frame (doFrame) of a choreographer arrives, the read rendering result is drawn on a canvas by using a native drawBitmap method of the canvas.

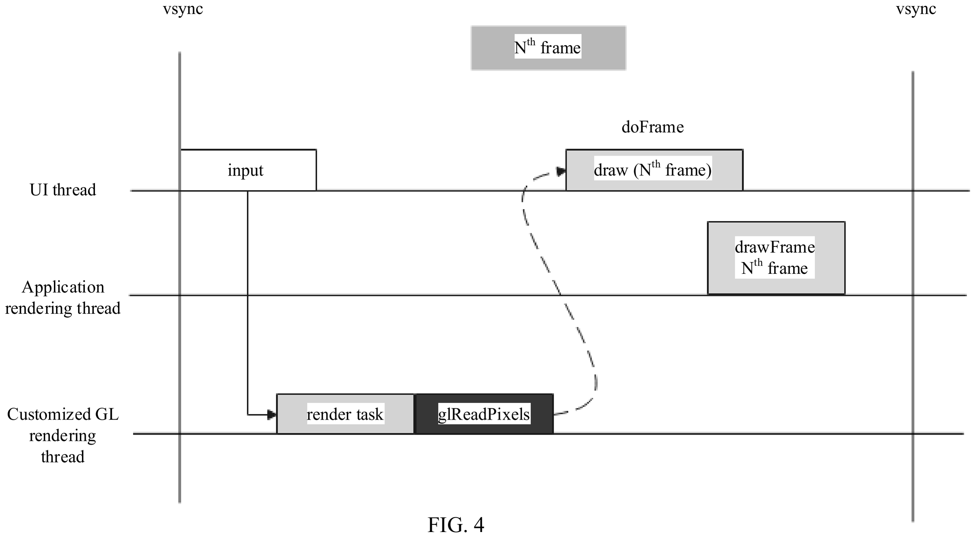

FIG. 4 is a diagram of a rendering time sequence of performing off-screen rendering by using OpenGL. As shown in FIG. 4, after a rendering task of OpenGL ends, image data is directly read from an off-screen rendering buffer by using a glReadPixels method. In this process, a UI thread is blocked, so that a rendering result of the N^{th} frame is submitted to a GPU texture in a drawFrame of the N^{th} frame. If the UI thread is not blocked, the result of the N^{th} frame can be drawn only in the (N+1)^{th} frame.

In other words, in the foregoing solution, data is copied from the GPU to the CPU, and consequently, hand-following performance is poor.

Based on the foregoing problems, embodiments of this application provide a graphics drawing method, to resolve a problem that brush stroke effect, texture effect, free transparency adjustment, and/or color blending effect cannot be implemented during drawing on native canvas on an Android platform or a HarmonyOS platform, and resolve a problem that hand-following performance is poor during off-screen rendering, to improve handwriting effect and hand-following performance.

The graphics drawing method provided in embodiments of this application may be applied to an electronic device. The electronic device may be a smartphone, a tablet computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), or another device. A specific type of the electronic device is not limited in embodiments of this application.

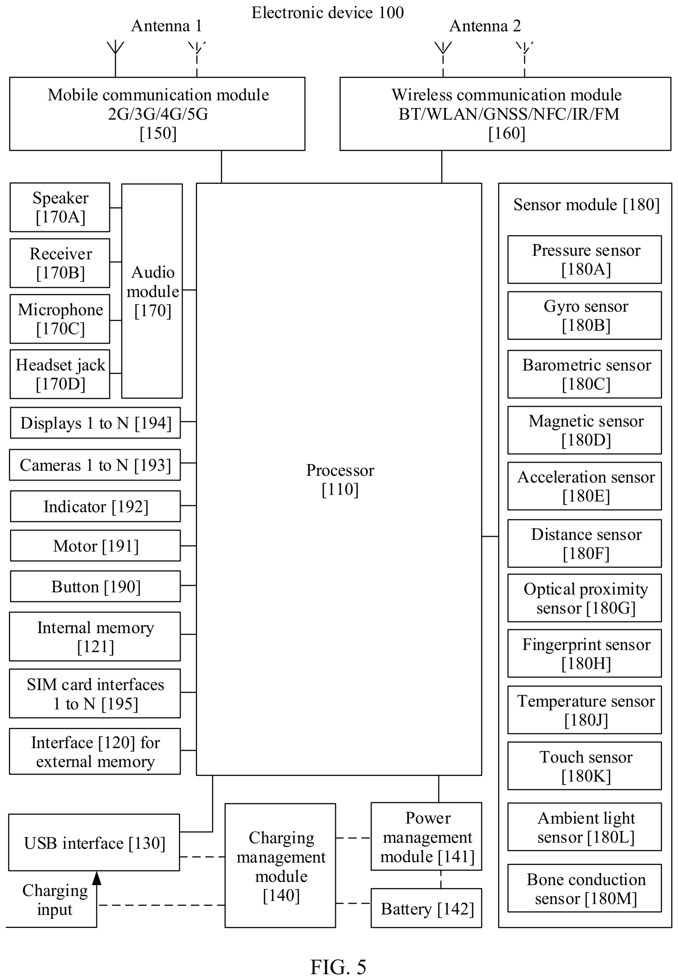

For example, FIG. 5 is a diagram of a structure of an electronic device according to an embodiment of this application. As shown in FIG. 5, an electronic device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, and a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyro sensor 180B, a barometric sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in embodiments of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus, including a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call by using a Bluetooth headset.

The PCM interface may also be configured to perform audio communication, and sample, quantize, and code an analog signal. In some embodiments, the audio module 170 may be coupled to the wireless communication module 160 through a PCM bus interface. In some embodiments, the audio module 170 may also transmit an audio signal to the wireless communication module 160 through the PCM interface, to implement a function of answering a call by using a Bluetooth headset. Both the I2S interface and the PCM interface may be used for audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music by using a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a shooting function of the electronic device 100. The processor 110 communicates with the display 194 through the DSI interface, to implement a display function of the electronic device 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to transmit data between the electronic device 100 and a peripheral device, or may be configured to connect to a headset for playing audio by using the headset. The interface may be further configured to connect to another electronic device such as an AR device.

It may be understood that an interface connection relationship between the modules illustrated in this embodiment of this application is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from a charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. When charging the battery 142, the charging management module 140 may further supply power to the electronic device 100 by using the power management module 141.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by an audio device (which is not limited to the speaker 170A, the receiver 170B, or the like), or displays an image or a video by the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the electronic device 100, and that includes a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1.

The electronic device 100 may implement a shooting function through the camera 193, the ISP, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a shooting scene. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP, to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation on frequency energy.

The video codec is configured to compress or decompress a digital video. The electronic device 100 may support one or more video codecs. In this way, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a mode of transfer between human brain neurons, and may further continuously perform self-learning. Applications such as intelligent cognition of the electronic device 100 may be implemented through the NPU, for example, image recognition, facial recognition, speech recognition, and text understanding.

The interface 120 for external memory may be used to connect to an external storage card, for example, a micro SD card, to extend a storage capability of the electronic device 100. The external memory card communicates with the processor 110 through the interface 120 for external memory, to implement a data storage function. For example, files such as music and videos are stored in the external storage card.

The internal memory 121 may be configured to store computer-executable program code. The executable program code includes instructions. The internal memory 121 may include a program storage area and a data storage area. The program storage area may store an operating system, an application required by at least one function (for example, a voice playing function or an image playing function), and the like. The data storage area may store data (such as audio data and an address book) created during use of the electronic device 100, and the like. In addition, the internal memory 121 may include a high-speed random access memory, or may include a nonvolatile memory, for example, at least one magnetic disk storage device, a flash memory, or a universal flash storage (universal flash storage, UFS). The processor 110 runs instructions stored in the internal memory 121 and/or instructions stored in the memory disposed in the processor, to perform various function applications and data processing of the electronic device 100.

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device 100 may be used to listen to music or answer a call in a hands-free mode by using the speaker 170A.

The receiver 170B, also referred to as an "earpiece", is configured to convert an electrical audio signal into a sound signal. When a call is answered or speech information is received through the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, so as to implement a directional recording function and the like.

The headset jack 170D is configured to connect to a wired headset. The headset jack 170D may be the USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display 194, the electronic device 100 detects intensity of the touch operation by using the pressure sensor 180A. The electronic device 100 may also calculate a touch location based on a detection signal of the pressure sensor 180A. In some embodiments, touch operations that are performed in a same touch position but have different touch operation intensity may correspond to different operation instructions. For example, when a touch operation whose touch operation intensity is less than a first pressure threshold is performed on a Messages application icon, an instruction for viewing an SMS message is performed. When a touch operation whose touch operation intensity is greater than or equal to the first pressure threshold is performed on the Messages application icon, an instruction to create a new SMS message is performed.

The gyro sensor 180B may be configured to determine a moving posture of the electronic device 100. In some embodiments, an angular velocity of the electronic device 100 around three axes (namely, axes x, y, and z) may be determined through the gyro sensor 180B. The gyro sensor 180B may be configured to implement image stabilization during shooting. For example, when the shutter is pressed, the gyro sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyro sensor 180B may also be used in a navigation scenario and a somatic game scenario.

The barometric sensor 180C is configured to measure barometric pressure. In some embodiments, the electronic device 100 calculates an altitude through the barometric pressure measured by the barometric sensor 180C, to assist in positioning and navigation.

The magnetic sensor 180D includes a Hall sensor. The electronic device 100 may detect opening and closing of a flip cover by using the magnetic sensor 180D. In some embodiments, when the electronic device 100 is a flip phone, the electronic device 100 may detect opening and closing of a flip cover based on the magnetic sensor 180D. Further, a feature such as automatic unlocking of the flip cover is set based on a detected opening or closing state of the leather case or a detected opening or closing state of the flip cover.

The acceleration sensor 180E may detect accelerations in various directions (usually on three axes) of the electronic device 100. When the electronic device 100 is still, a magnitude and a direction of gravity may be detected. The acceleration sensor 180E may be further configured to identify a posture of the electronic device, and is used in an application such as switching between a landscape mode and a portrait mode or a pedometer.

The distance sensor 180F is configured to measure a distance. The electronic device 100 may measure the distance in an infrared manner or a laser manner. In some embodiments, in a shooting scenario, the electronic device 100 may measure a distance through the distance sensor 180F to implement quick focusing.

The optical proximity sensor 180G may include, for example, a light emitting diode (LED) and an optical detector, for example, a photodiode. The light emitting diode may be an infrared light emitting diode. The electronic device 100 emits infrared light by using the light-emitting diode. The electronic device 100 detects infrared reflected light from a nearby object through the photodiode. When sufficient reflected light is detected, it may be determined that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to automatically turn off a screen for power saving. The optical proximity sensor 180G may also be used in a smart cover mode or a pocket mode to automatically perform screen unlocking or locking.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy through the temperature detected by the temperature sensor 180J. For example, when the temperature reported by the temperature sensor 180J exceeds a threshold, the electronic device 100 lowers performance of a processor nearby the temperature sensor 180J, to reduce power consumption for thermal protection. In some other embodiments, when the temperature is less than another threshold, the electronic device 100 heats the battery 142 to prevent the electronic device 100 from being shut down abnormally due to a low temperature. In some other embodiments, when the temperature is lower than still another threshold, the electronic device 100 boosts an output voltage of the battery 142 to avoid abnormal shutdown caused by a low temperature.

The touch sensor 180K is also referred to as a "touch component". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of the touch event. A visual output related to the touch operation may be provided by the display 194. In some other embodiments, the touch sensor 180K may also be disposed on a surface of the electronic device 100 at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may also be disposed in the headset, to obtain a bone conduction headset. The audio module 170 may obtain a speech signal through parsing based on the vibration signal that is of the vibration bone of the vocal-cord part and that is obtained by the bone conduction sensor 180M, to implement a speech function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device 100 may receive a button input, and generate a button signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playback) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may also be compatible with different types of SIM cards. The SIM card interface 195 may also be compatible with an external storage card. The electronic device 100 interacts with a network through the SIM card, to implement functions such as conversation and data communication. In some embodiments, the electronic device 100 uses an eSIM, that is, an embedded SIM card. The eSIM card may be embedded into the electronic device 100, and cannot be separated from the electronic device 100.

For ease of understanding, in the following embodiments of this application, an electronic device having the structure shown in FIG. 5 is used as an example to describe in detail the graphics drawing method provided in embodiments of this application with reference to the accompanying drawings and application scenarios.

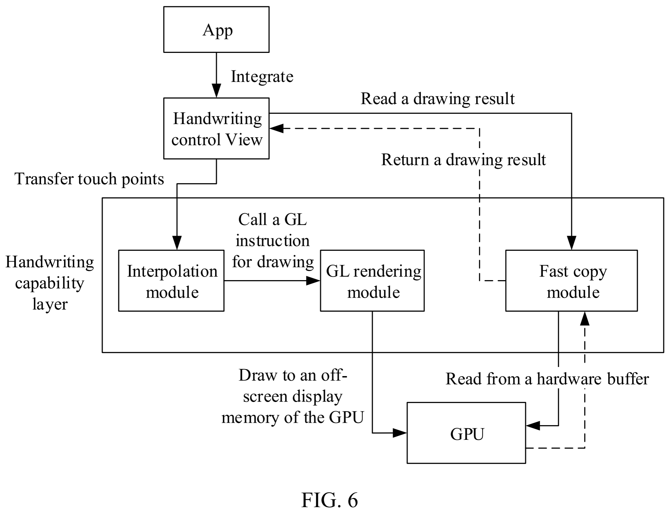

FIG. 6 is a diagram of an architecture of a graphics drawing method according to an embodiment of this application. As shown in FIG. 6, the foregoing architecture may include: an application (application, App), a handwriting control View, a handwriting capability layer, and a GPU. The handwriting control View is integrated in the App, the handwriting capability layer is located in a CPU, and the handwriting capability layer may include an interpolation module, a GL rendering module, and a fast copy module.

Refer to FIG. 6. After obtaining touch points, the handwriting control View transfers the touch points to the interpolation module. Then, the interpolation module calls a GL instruction for drawing, and the GL rendering module executes the GL instruction to draw a graphic into an off-screen display memory of the GPU. After the handwriting control View sends a notification of reading a drawing result to the fast copy module, the fast copy module reads the drawing result from a hardware buffer (hardware buffer) of the GPU, and then the fast copy module returns the drawing result to the handwriting control View to complete graphics drawing.

With reference to the architecture shown in FIG. 6, the following describes a graphics drawing method provided in an embodiment of this application.

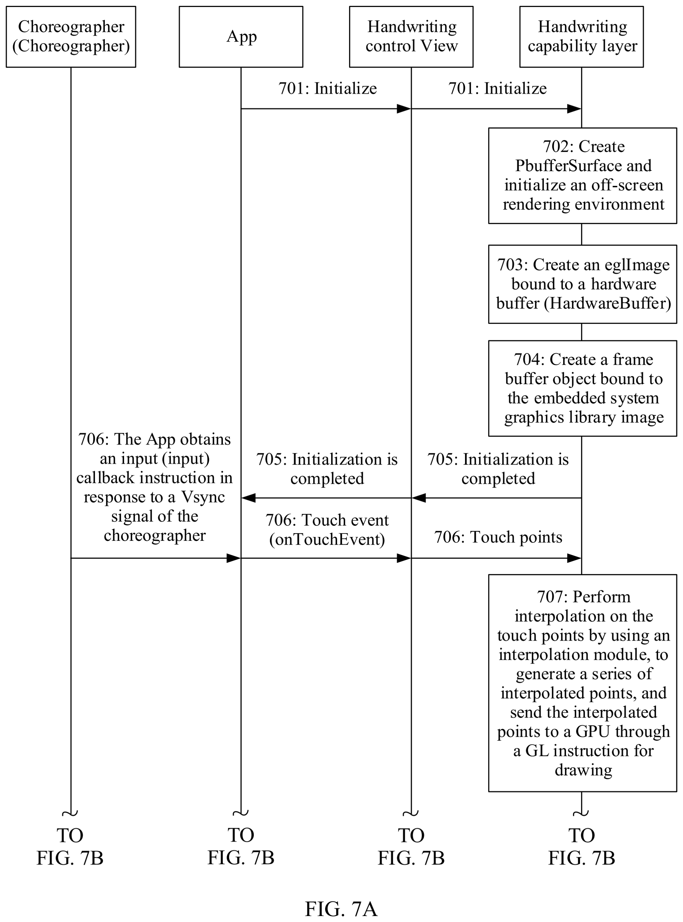

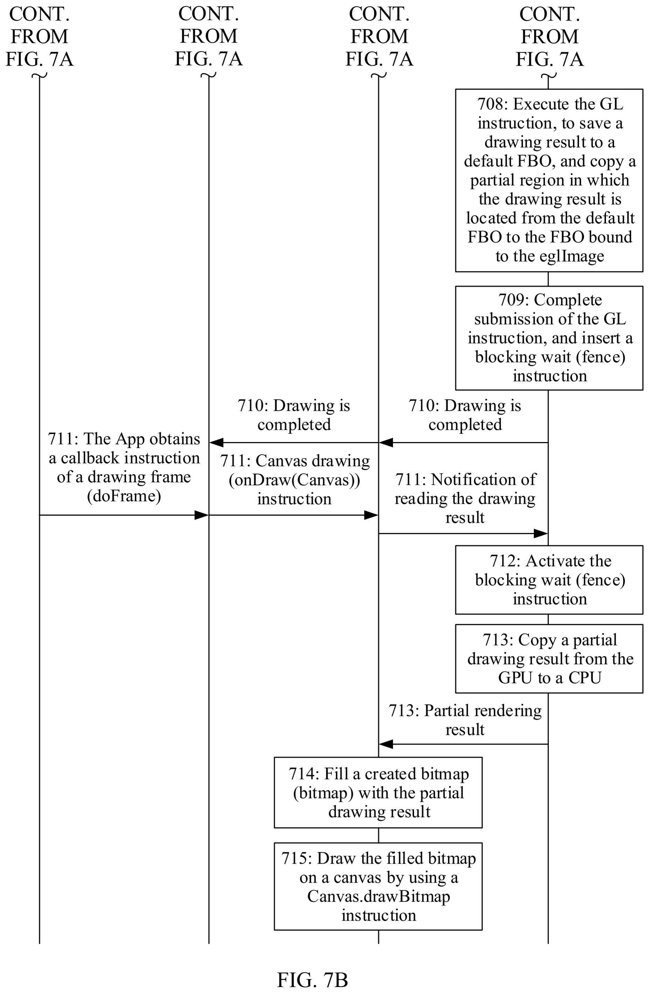

FIG. 7A and FIG. 7B are a flowchart of a graphics drawing method according to an embodiment of this application. As shown in FIG. 7A and FIG. 7B, the graphics drawing method may include the following steps.

Step 701: When a handwriting App is started, initialize a handwriting environment, where the App initiates initialization, and notifies a handwriting capability layer through a handwriting control View.

Step 702: In an initialization phase, the handwriting capability layer creates PbufferSurface and initializes an off-screen rendering environment by calling an eglCreatePBufferSurface interface in a main thread (UI thread).

In other words, the handwriting capability layer uses the main thread to process a subsequent off-screen rendering task, so that an advantage that the main thread is allocated as a medium core or a big core in a CPU can be used to improve an execution speed of the rendering task.

Step 703: The handwriting capability layer creates an embedded system graphics library image (embedded-system graphics library image, eglImage) bound to a hardware buffer (HardwareBuffer).

Step 704: The handwriting capability layer creates a frame buffer object (frame buffer object, FBO) bound to the embedded system graphics library image.

Step 705: The handwriting capability layer returns initialization completion to the App through the handwriting control View.

Step 706: In a handwriting process of the handwriting application, the App obtains an input (input) callback instruction in response to a Vsync signal of a choreographer, the App transfers a touch event (onTouchEvent) to the handwriting control View, and the handwriting control View transfers touch points to the handwriting capability layer.

Step 707: The handwriting capability layer performs interpolation on the touch points by using the interpolation module, to generate a series of interpolated points, and sends the interpolated points to the GPU through a GL instruction for drawing.

Step 708: A GL rendering module at the handwriting capability layer executes the GL instruction, to save a drawing result to a default FBO, and then copies, by using glBlitFramebuffer, a partial region in which the drawing result is located from the default FBO to the FBO bound to the eglImage.

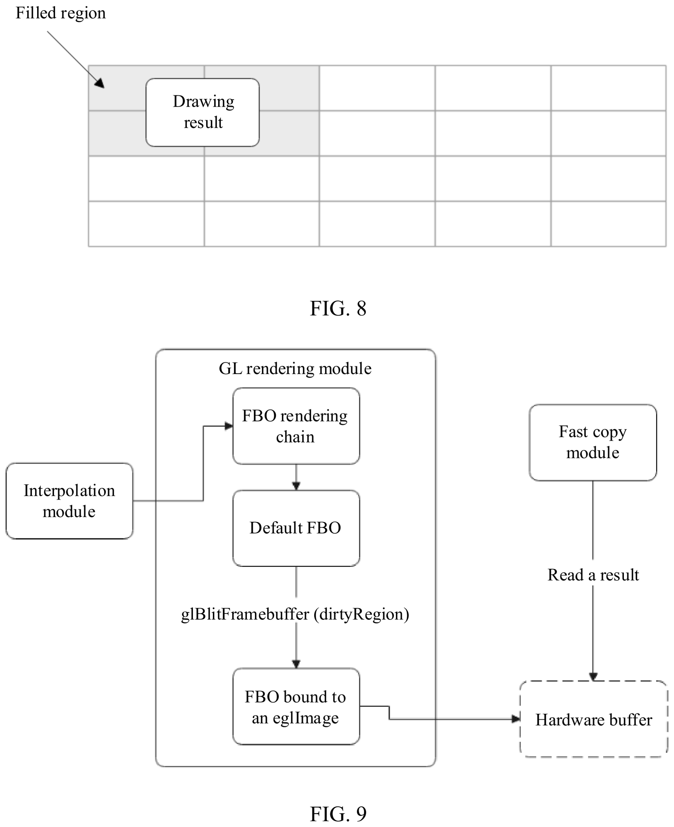

Specifically, refer to FIG. 8. During copying in this embodiment, copying is performed only on a partial region in which a current drawing result is located, but not all regions. In FIG. 8, a filled region is the partial region in which the drawing result is located. FIG. 8 is a diagram of the partial region according to an embodiment of this application.

Step 709: The handwriting capability layer completes submission of the GL instruction, and inserts a blocking wait (fence) instruction.

Step 710: After drawing is completed, the handwriting capability layer notifies, through the handwriting control View, the App that the drawing is completed.

Step 711: After obtaining a callback instruction of a drawing frame (doFrame) in response to the Vsync signal of the choreographer, the App sends a canvas drawing (onDraw(Canvas)) instruction to the handwriting control View, and the handwriting control View sends a notification of reading the drawing result to the handwriting capability layer.

Step 712: The handwriting capability layer activates the blocking wait (fence) instruction.

Step 713: The handwriting capability layer copies a partial drawing result from the GPU to the CPU through a fast copy module, and returns the partial drawing result to the handwriting control View.

Specifically, FIG. 9 is a diagram of fast copying according to an embodiment of this application. Refer to FIG. 9. The GL rendering module at the handwriting capability layer executes a GL instruction to save the drawing result to the default FBO, and then copies, by using glBlitFramebuffer, the partial region in which the drawing result is located from the default FBO to the FBO bound to the eglImage. Then, the handwriting capability layer copies the partial drawing result from the hardware buffer (hardware buffer) bound to the eglImage through the fast copy module.

Step 714: The handwriting control View fills a created bitmap (bitmap) with the partial drawing result.

As described above, in this embodiment, the partial drawing result may be a partial region in which the current drawing result is located. In other words, during copying, only the partial region in which the current drawing is located is copied, and not all regions need to be copied, so that a copying speed can be improved, and hand-following performance is improved.

Step 715: The handwriting control View draws the filled bitmap on a canvas by using a Canvas.drawBitmap instruction.

According to the graphics drawing method provided in this embodiment of this application, effect of a plurality of brushes with textures and brush strokes, such as a pen, a ball pen, a pencil, and/or a fluorescent pen can be implemented, and transparency of a brush can be customized, to greatly improve hand-following performance. In addition, in this embodiment of this application, the main thread is used to process a rendering task, and an execution speed of the rendering task is improved by using an advantage that the main thread is allocated as a medium core or a big core in the CPU. A partial drawing manner and a fast copying manner are used to reduce a latency of data copying between the GPU and the CPU, and improve hand-following performance. An OpenGL off-screen rendering manner is used to implement a plurality of customized brush effects (such as a brush stroke, a texture, transparency, and/or color blending).

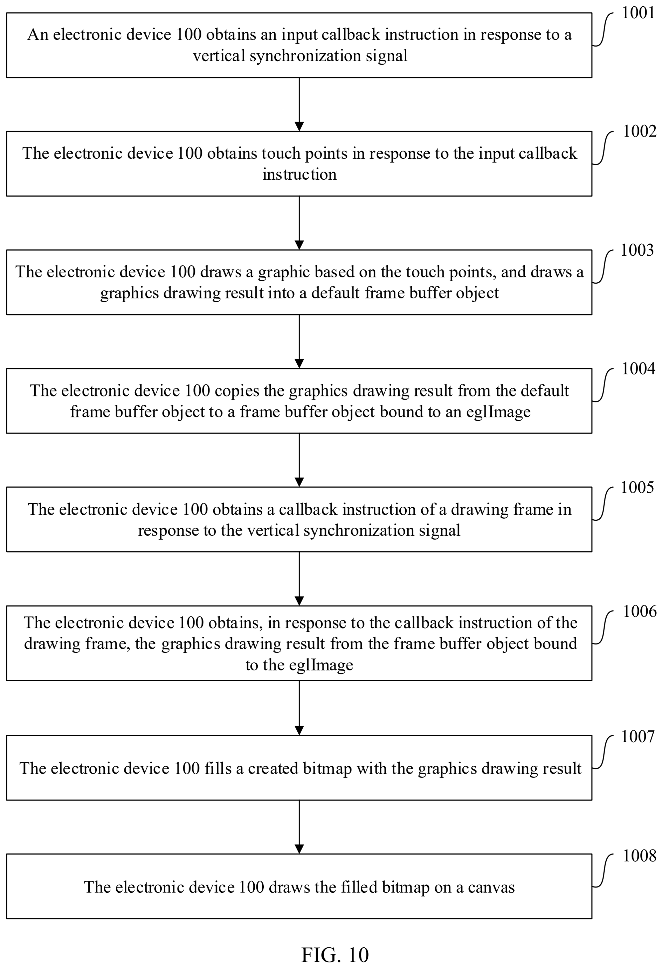

FIG. 10 is a flowchart of another graphics drawing method according to an embodiment of this application. As shown in FIG. 10, the graphics drawing method may include the following steps.

Step 1001: An electronic device 100 obtains an input callback instruction in response to a vertical synchronization signal.

Further, before step 1001, the electronic device 100 may further start a target application. The target application includes a handwriting application. Then, the electronic device 100 creates an off-screen rendering environment, creates an eglImage bound to a hardware buffer, and creates a frame buffer object bound to the eglImage.

Step 1002: The electronic device 100 obtains touch points in response to the input callback instruction.

Step 1003: The electronic device 100 draws a graphic based on the touch points, and draws a graphics drawing result into a default frame buffer object.

Specifically, drawing the graphic based on the touch points may be: The electronic device 100 performs interpolation processing based on the touch points, to generate interpolated points, and submits the interpolated points to a graphics processing unit through a graphics library instruction, so that the graphics processing unit draws the graphic based on the interpolated points.

Step 1004: The electronic device 100 copies the graphics drawing result from the default frame buffer object to the frame buffer object bound to the eglImage.

Step 1005: The electronic device 100 obtains a callback instruction of a drawing frame in response to the vertical synchronization signal.

Step 1006: The electronic device 100 obtains, in response to the callback instruction of the drawing frame, the graphics drawing result from the frame buffer object bound to the eglImage.

The frame buffer object bound to the eglImage is located in the hardware buffer bound to the eglImage. In this way, obtaining, in response to the callback instruction of the drawing frame, the graphics drawing result from the frame buffer object bound to the eglImage may be: obtaining, in response to the callback instruction of the drawing frame, the graphics drawing result from the hardware buffer bound to the eglImage.

Step 1007: The electronic device 100 fills a created bitmap with the graphics drawing result.

Step 1008: The electronic device 100 draws the filled bitmap on a canvas.

During specific implementation, step 1004 may be: The electronic device 100 obtains a partial region to which the graphics drawing result belongs, and copies pixels of the partial region from the default frame buffer object to the frame buffer object bound to the eglImage. In this way, step 1006 may be: The electronic device 100 obtains, in response to the callback instruction of the drawing frame, pixels of the partial region from the frame buffer object bound to the eglImage. Step 1007 may be: The electronic device 100 fills the created bitmap with the obtained pixels of the partial region. In other words, in this embodiment, when copying the graphics drawing result, the electronic device 100 may copy only the partial region in which current drawing is performed, and does not need to copy all regions, so that a copying speed can be improved, and hand-following performance is improved.

In the foregoing graphics drawing method, the electronic device 100 obtains the input callback instruction in response to the vertical synchronization signal, then obtains the touch points in response to the input callback instruction, draws the graphic based on the touch points, and draws the graphics drawing result into the default frame buffer object. Then, the electronic device 100 copies the graphics drawing result from the default frame buffer object to the frame buffer object bound to the eglImage, and obtains the callback instruction of the drawing frame in response to the vertical synchronization signal. The electronic device 100 obtains, in response to the callback instruction of the drawing frame, the graphics drawing result from the frame buffer object bound to the eglImage, and fills the created bitmap with the graphics drawing result. Finally, the electronic device 100 draws the filled bitmap on the canvas. In this way, a manner combining off-screen rendering and fast copy may be used to perform rendering in a time sequence of an original control view, to improve handwriting effect and hand-following performance of a handwriting application.

It may be understood that some or all of the steps or operations in the foregoing embodiments are merely examples, and other operations or variants of various operations may be further performed in embodiments of this application. In addition, the steps may be performed in another sequence different from that presented in the foregoing embodiments, and not all the operations in the foregoing embodiments may be performed.

It may be understood that, to implement the foregoing functions, the electronic device includes corresponding hardware and/or software modules for performing the functions. Algorithm steps in the examples described with reference to embodiments disclosed in this application can be implemented by hardware or a combination of hardware and computer software in this application. Whether a function is performed by hardware or hardware driven by computer software depends on particular applications and design constraints of the technical solutions. A person skilled in the art may use different methods to implement the described functions for each specific application with reference to embodiments, but it should not be considered that the implementation goes beyond the scope of this application.

In this embodiment, the electronic device may be divided into functional modules according to the foregoing method embodiments. For example, each functional module may be obtained through division based on each corresponding function, or two or more functions may be integrated into one module. The integrated module may be implemented in a form of hardware. It should be noted that division into the modules in this embodiment is an example and is merely logical function division. In actual implementation, there may be another division manner.

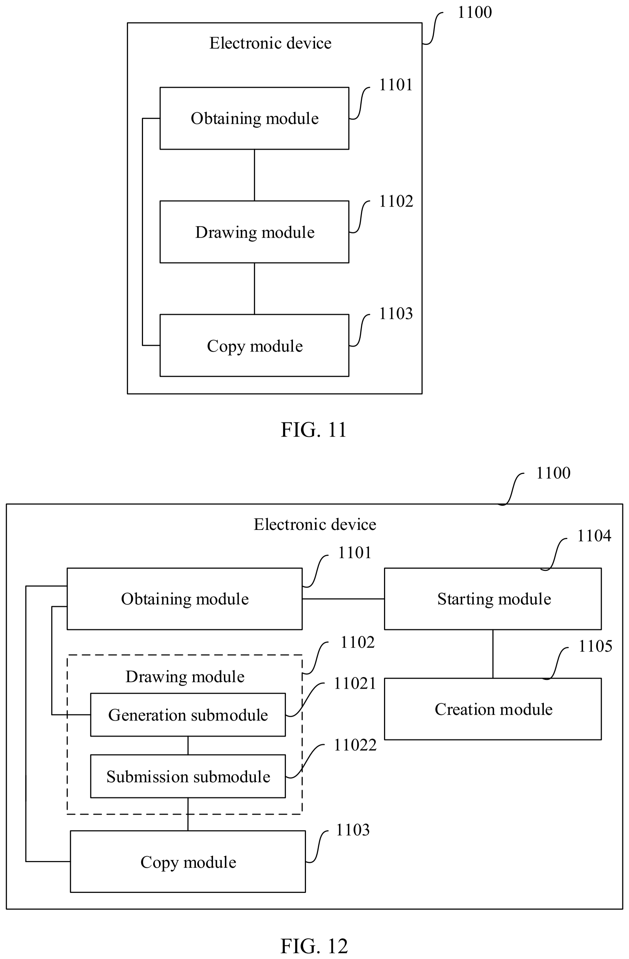

FIG. 11 is a diagram of a structure of an electronic device according to another embodiment of this application. When each functional module is obtained through division based on each corresponding function, FIG. 11 is a diagram of possible composition of an electronic device 1100 in the foregoing embodiment. As shown in FIG. 11, the electronic device 1100 may include: an obtaining module 1101, a drawing module 1102, and a copy module 1103.

The obtaining module 1101 is configured to: obtain an input callback instruction in response to a vertical synchronization signal, and obtain touch points in response to the input callback instruction.

The drawing module 1102 is configured to: draw a graphic based on the touch points, and draw a graphics drawing result into a default frame buffer object. Specifically, a function of the drawing module 1102 may be implemented by the interpolation module and the GL rendering module in FIG. 6.

The copy module 1103 is configured to copy the graphics drawing result from the default frame buffer object to a frame buffer object bound to an eglImage. Specifically, a function of the copy module 1103 may be implemented by the GL rendering module in FIG. 6.

The obtaining module 1101 is further configured to: obtain a callback instruction of a drawing frame in response to the vertical synchronization signal, and obtain, in response to the callback instruction of the drawing frame, the graphics drawing result from the frame buffer object bound to the eglImage. Specifically, a function of the obtaining module 1101 may be implemented by the fast copy module in FIG. 6.

The drawing module 1102 is further configured to: fill a created bitmap with the graphics drawing result, and draw the filled bitmap on a canvas.

It should be noted that all related content of the steps in the method embodiment shown in FIG. 10 in this application may be cited in function descriptions of corresponding functional modules. Details are not described herein again.

The electronic device 1100 provided in this embodiment is configured to perform the graphics drawing method provided in the embodiment shown in FIG. 10 in this application, and therefore can achieve same effect as the foregoing method.

FIG. 12 is a diagram of a structure of an electronic device according to still another embodiment of this application. Compared with the electronic device 1100 shown in FIG. 11, a difference lies in that the drawing module 1102 may include a generation submodule 11021 and a submission submodule 11022.

The generation submodule 11021 is configured to perform interpolation processing based on the touch points, to generate interpolated points.

The submission submodule 11022 is configured to submit the interpolated points to a graphics processing unit through a graphics library instruction, so that the graphics processing unit draws the graphic based on the interpolated points.

In this embodiment, the frame buffer object bound to the eglImage is located in a hardware buffer bound to the eglImage. In this way, the obtaining module 1101 is specifically configured to: obtain, in response to the callback instruction of the drawing frame, the graphics drawing result from the hardware buffer bound to the eglImage.

The copy module 1103 is specifically configured to: obtain a partial region to which the graphics drawing result belongs, and copy pixels of the partial region from the default frame buffer object to the frame buffer object bound to the eglImage.

The obtaining module 1101 is specifically configured to: obtain, in response to the callback instruction of the drawing frame, the pixels of the partial region from the frame buffer object bound to the eglImage. In this way, the drawing module 1102 is specifically configured to fill the created bitmap with the pixels of the partial region obtained by the obtaining module 1101.

Further, the electronic device 1100 may further include a starting module 1104 and a creation module 1105.

The starting module 1104 is configured to start a target application, where the target application includes a handwriting application.

The creation module 1105 is configured to: create an off-screen rendering environment, create the eglImage bound to the hardware buffer, and create the frame buffer object bound to the eglImage.

It should be noted that all related content of the steps in the method embodiment shown in FIG. 10 in this application may be cited in function descriptions of corresponding functional modules. Details are not described herein again.

The electronic device 1100 provided in this embodiment is configured to perform the graphics drawing method provided in the embodiment shown in FIG. 10 in this application, and therefore can achieve same effect as the foregoing method.

It should be understood that the electronic device 1100 may correspond to the electronic device 100 shown in FIG. 5. Functions of the obtaining module 1101, the drawing module 1102, the copy module 1103, the starting module 1104, and the creation module 1105 may be implemented by the processor 110 in the electronic device 100 shown in FIG. 5.

When an integrated unit is used, the electronic device 1100 may include a processing module, a storage module, and a communication module.

The processing module may be configured to control and manage an action of the electronic device 1100. For example, the processing module may be configured to support the electronic device 1100 in performing the steps performed by the obtaining module 1101, the drawing module 1102, the copy module 1103, the starting module 1104, and the creation module 1105. The storage module may be configured to support an electronic device 1100 in storing program code, data, and the like. The communication module may be configured to support the electronic device 1100 in communicating with another device.

The processing module may be a processor or a controller, and may implement or execute various example logic blocks, modules, and circuits described with reference to content disclosed in this application. The processor may alternatively be a combination for implementing a computing function, for example, a combination including one or more microprocessors or a combination of a digital signal processor (digital signal processor, DSP) and a microprocessor. The storage module may be a memory. The communication module may be specifically a device, for example, a radio frequency circuit, a Bluetooth chip, and/or a Wi-Fi chip, that interacts with another electronic device.

In an embodiment, when the processing module is a processor, and the storage module is a memory, the electronic device 1100 in this embodiment may be a device with the structure shown in FIG. 5.

An embodiment of this application further provides a computer-readable storage medium. The computer-readable storage medium stores a computer program. When the computer program is run on a computer, the computer is enabled to perform the method provided in the embodiment shown in FIG. 10 in this application.

An embodiment of this application further provides a computer program product. The computer program product includes a computer program. When the computer program is run on a computer, the computer is enabled to perform the method provided in the embodiment shown in FIG. 10 in this application.

In embodiments of this application, "at least one" means one or more, and "plurality of" means two or more. "And/or" describes association relationships of associated objects, and indicates that there may be three relationships. For example, A and/or B may indicate that only A exists, both A and B exist, and only B exists. A and B may be singular or plural. The character "/" generally indicates an "or" relationship between the associated objects. "At least one of the following" and similar expressions mean any combination of these terms, including any combination of single or plural terms. For example, at least one of a, b, or c may indicate a, b, c, a and b, a and c, b and c, or a, b, and c, where a, b, and c may be singular or plural.

A person of ordinary skill in the art may be aware that the units and algorithm steps described in embodiments disclosed in this specification can be implemented by a combination of electronic hardware, computer software, and electronic hardware. Whether the functions are performed by hardware or software depends on particular applications and design constraints of the technical solutions. A person skilled in the art may use different methods to implement the described functions for each specific application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, when any function is implemented in a form of software functional unit and sold or used as an independent product, the function may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for indicating a computer device (which may be a personal computer, a server, or a network device) to perform all or a part of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application. Any variation or replacement readily figured out by a person skilled in the art within the technical scope disclosed in this application shall fall within the protection scope in this application. Therefore, the protection scope of this application shall be subject to the protection scope of the claims.

## Claims

1. A graphics drawing method, comprising:
obtaining an input callback instruction in response to a vertical synchronization signal;
obtaining touch points in response to the input callback instruction;
drawing a graphic based on the touch points, and drawing a graphics drawing result into a default frame buffer object;
copying the graphics drawing result from the default frame buffer object to a frame buffer object bound to an embedded system graphics library image;
obtaining a callback instruction of a drawing frame in response to the vertical synchronization signal;
obtaining, in response to the callback instruction of the drawing frame, the graphics drawing result from the frame buffer object bound to the embedded system graphics library image;
filling a created bitmap with the graphics drawing result; and
drawing the filled bitmap on a canvas.

2. The method according to claim 1, wherein drawing the graphic based on the touch points comprises:
performing interpolation processing based on the touch points, to generate interpolated points; and
submitting the interpolated points to a graphics processing unit through a graphics library instruction, so that the graphics processing unit draws the graphic based on the interpolated points.

3. The method according to claim 1, wherein the frame buffer object bound to the embedded system graphics library image is located in a hardware buffer bound to the embedded system graphics library image; and
obtaining, in response to the callback instruction of the drawing frame, the graphics drawing result from the frame buffer object bound to the embedded system graphics library image comprises:
obtaining, in response to the callback instruction of the drawing frame, the graphics drawing result from the hardware buffer bound to the embedded system graphics library image.

4. The method according to claim 1, wherein copying the graphics drawing result from the default frame buffer object to the frame buffer object bound to the embedded system graphics library image comprises:
obtaining a partial region to which the graphics drawing result belongs; and
copying pixels of the partial region from the default frame buffer object to the frame buffer object bound to the embedded system graphics library image.

5. The method according to claim 4, wherein obtaining, in response to the callback instruction of the drawing frame, the graphics drawing result from the frame buffer object bound to the embedded system graphics library image comprises:
obtaining, in response to the callback instruction of the drawing frame, the pixels of the partial region from the frame buffer object bound to the embedded system graphics library image.

6. The method according to claim 5, wherein filling the created bitmap with the graphics drawing result comprises:
filling the created bitmap with the obtained pixels of the partial region.

7. The method according to any one of claims 1 to 6, wherein before obtaining the input callback instruction in response to the vertical synchronization signal, the method further comprises:
starting a target application, wherein the target application comprises a handwriting application;
creating an off-screen rendering environment, and creating the embedded system graphics library image bound to the hardware buffer; and
creating the frame buffer object bound to the embedded system graphics library image.

8. A graphics drawing apparatus, comprising:
an obtaining module, configured to: obtain an input callback instruction in response to a vertical synchronization signal, and obtain touch points in response to the input callback instruction;
a drawing module, configured to: draw a graphic based on the touch points, and draw a graphics drawing result into a default frame buffer object; and
a copy module, configured to copy the graphics drawing result from the default frame buffer object to a frame buffer object bound to an embedded system graphics library image, wherein
the obtaining module is further configured to: obtain a callback instruction of a drawing frame in response to the vertical synchronization signal, and obtain, in response to the callback instruction of the drawing frame, the graphics drawing result from the frame buffer object bound to the embedded system graphics library image; and
the drawing module is further configured to: fill a created bitmap with the graphics drawing result, and draw the filled bitmap on a canvas.

9. An electronic device, comprising:
one or more processors, a memory, a plurality of applications, and one or more computer programs, wherein the one or more computer programs are stored in the memory, the one or more computer programs comprise instructions, and when the instructions are executed by the electronic device, the electronic device is enabled to perform the method according to any one of claims 1 to 7.

10. A computer-readable storage medium, wherein the computer-readable storage medium stores a computer program, and when the computer program is run on a computer, the computer is enabled to perform the method according to any one of claims 1 to 7.
